(19) Europäisches Patentamt
European Patent Office
Office européen des brevets

(11) **EP 3 509 802 B1**

(12) **EUROPÄISCHE PATENTSCHRIFT**

(45) Veröffentlichungstag und Bekanntmachung des Hinweises auf die Patenterteilung:
**30.11.2022 Patentblatt 2022/48**

(21) Anmeldenummer: **17761264.5**

(22) Anmeldetag: **04.09.2017**

(51) Internationale Patentklassifikation (IPC):
**B25J 9/16** *(2006.01)* **G05B 19/402** *(2006.01)*

(52) Gemeinsame Patentklassifikation (CPC):
**B25J 9/1676;** G05B 2219/45013

(86) Internationale Anmeldenummer:
**PCT/EP2017/072087**

(87) Internationale Veröffentlichungsnummer:
**WO 2018/046434 (15.03.2018 Gazette 2018/11)**

(54) **OPTIMIERUNGSVERFAHREN FÜR EINEN BESCHICHTUNGSROBOTER UND ENTSPRECHENDE BESCHICHTUNGSANLAGE**

OPTIMISATION METHOD FOR A COATING ROBOT AND CORRESPONDING COATING SYSTEM

PROCÉDÉ D'OPTIMISATION POUR UN ROBOT DE REVÊTEMENT ET INSTALLATION DE REVÊTEMENT CORRESPONDANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2016 DE 102016010945**

(43) Veröffentlichungstag der Anmeldung:
**17.07.2019 Patentblatt 2019/29**

(73) Patentinhaber: **Dürr Systems AG
74321 Bietigheim-Bissingen (DE)**

(72) Erfinder: **SCHWEIGLER, Sven
71679 Asperg (DE)**

(74) Vertreter: **v. Bezold & Partner Patentanwälte - PartG mbB
Ridlerstraße 57
80339 München (DE)**

(56) Entgegenhaltungen:
EP-A1- 2 072 195    EP-A1- 2 315 093
EP-A2- 1 332 841

- **DENG SIHAO ET AL: "Kinematic Optimization of Robot Trajectories for Thermal Spray Coating Application", JOURNAL OF THERMAL SPRAY TECHNOLOGY, ASM INTERNATIONAL, MATERIALS PARK, US, Bd. 23, Nr. 8, 12. August 2014 (2014-08-12), Seiten 1382-1389, XP035375827, ISSN: 1059-9630, DOI: 10.1007/S11666-014-0137-7 [gefunden am 2014-08-12]**
- **HYOTYNIEMI H: "Locally Controlled Optimization of Spray Painting Robot Trajectories", 19900820; 19900820 - 19900822, Bd. 1, 20. August 1990 (1990-08-20), Seiten 283-287, XP010278360,**
- **HEPING CHEN ET AL: "Automated robot trajectory planning for spray painting of free-form surfaces in automotive manufacturing", PROCEEDINGS / 2002 IEEE INTERNATIONAL CONFERENCE ON ROBOTICS AND AUTOMATION : MAY 11 - 15, 2002, WASHINGTON, D.C, IEEE SERVICE CENTER, PISCATAWAY, NJ, Bd. 1, 11. Mai 2002 (2002-05-11), Seite 450, XP032882428, DOI: 10.1109/ROBOT.2002.1013401 ISBN: 978-0-7803-7272-6**

- **LUETH T C ED - INSTITUTE OF ELECTRICAL AND ELECTRONICS ENGINEERS: "Automated planning of robot workcell layouts", PROCEEDINGS OF THE INTERNATIONAL CONFERENCE ON ROBOTICS AND AUTOMATION NICE, MAY 12 - 14, 19; [PROCEEDINGS OF THE INTERNATIONAL CONFERENCE ON ROBOTICS AND AUTOMATION], LOS ALAMITOS, IEEE COMP. SOC. PRESS, US, Bd. CONF. 8, 12. Mai 1992 (1992-05-12), Seiten 1103-1108, XP010027753, DOI: 10.1109/ROBOT.1992.220201 ISBN: 978-0-8186-2720-0**

**Beschreibung**

Die Erfindung betrifft ein Optimierungsverfahren zur Berechnung einer optimierten Bewegungsbahn eines Beschichtungsroboters (z.B. Lackierroboter), der ein Applikationsgerät (z.B. Rotationszerstäuber) über eine zu beschichtende Bauteiloberfläche eines Bauteils (z.B. Kraftfahrzeugkarosseriebauteil) führt. Weiterhin betrifft die Erfindung eine entsprechende Beschichtungsanlage.

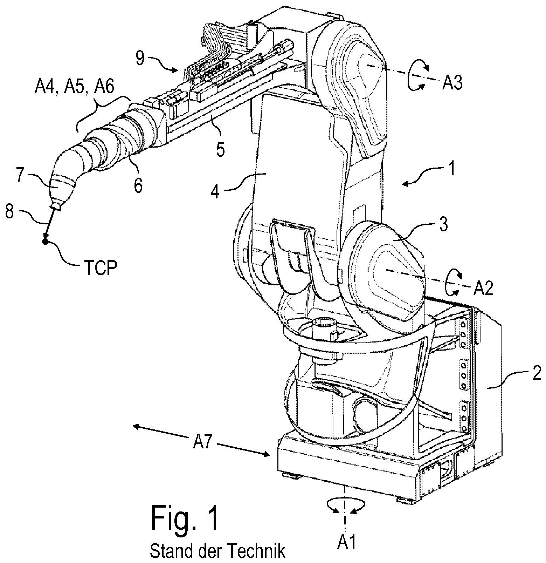

In modernen Lackieranlagen zur Lackierung von Kraftfahrzeugkarosseriebauteilen werden üblicherweise mehrachsige Lackierroboter 1 eingesetzt, wie sie beispielsweise in Figur 1 dargestellt sind. So weist der Lackierroboter 1 eine Roboterbasis 2, ein drehbares Roboterglied 3, einen proximalen Roboterarm 4, einen distalen Roboterarm 5, eine mehrachsige Roboterhandachse 6 und einen Rotationszerstäuber 7 auf, was an sich aus dem Stand der Technik bekannt ist. Das drehbare Roboterglied 3 ist hierbei um eine vertikal ausgerichtete erste Roboterachse A1 relativ zu der Roboterbasis 2 drehbar. Der proximale Roboterarm 4 ist wiederrum um eine horizontal ausgerichtete zweite Roboterachse A2 relativ zu dem drehbaren Roboterglied 3 drehbar. Der distale Roboterarm 5 ist um eine horizontal ausgerichtete dritte Roboterachse A3 relativ zu dem proximalen Roboterarm 4 schwenkbar. Weiterhin ist zu erwähnen, dass die Roboterhandachse 6 in diesem Ausführungsbeispiel drei Roboterachsen A4, A5 und A6 aufweist, um eine hochbewegliche Führung des Rotationszerstäubers 7 zu ermöglichen. Ferner ist zu erwähnen, dass die Roboterbasis 2 in diesem Ausführungsbeispiel entlang einer Linearachse entlang einer Roboterachse A7 linear verfahrbar ist.

Im Betrieb gibt der Rotationszerstäuber 7 einen Sprühstrahl eines Lacks auf das zu beschichtende Bauteil ab, wobei der Sprühstrahl eine Sprühstrahlachse 8 aufweist, die auf einen programmierten Farbauftreffpunkt TCP (TCP: Tool Center Point) ausgerichtet ist.

Darüber hinaus ist noch zu erwähnen, dass auf dem distalen Roboterarm 5 ein Linearfarbwechsler 9 angeordnet ist, was an sich aus dem Stand der Technik bekannt ist und deshalb nicht mehr beschrieben werden muss. Im Betrieb ist der Linearfarbwechsler 9 durch eine Abdeckung abgedeckt, wobei die Abdeckung in der Zeichnung nicht dargestellt ist, um den Blick auf den Linearfarbwechsler 9 zu ermöglichen.

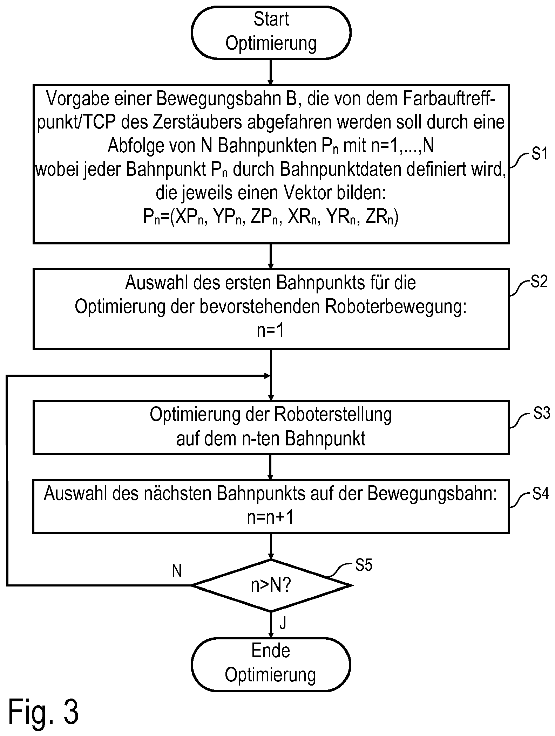

Im Betrieb wird der Lackierroboter 1 so bewegt, dass der programmierte Farbauftreffpunkt TCP einer vorgegebenen Roboterbahn B über die Bauteiloberfläche des zu lackierenden Bauteils (z. B. Kraftfahrzeugkarosseriebauteil) folgt. Figur 2 zeigt in schematischer Form die Roboterbahn B, die durch mehrere Punkte P1-P6 definiert wird, wobei die Bahnpunkte P1-P6 Stützstellen für die Roboterbahn B bilden. Wichtig ist hierbei nicht nur die räumliche Position der einzelnen Bahnpunkte P1-Pi, sondern auch die Ausrichtung des Rotationszerstäubers 7 und somit auch der Sprühstrahlachse 8.

Vor dem eigentlichen Beschichtungsbetrieb wird die Roboterbahn B dann üblicherweise offline programmiert, wozu beispielsweise Programmierprogramme verwendet werden können, die unter den Markennamen ROBCAD®, Process Simulate™ und fast®CURVE kommerziell erhältlich sind. Dabei können auch zusätzliche Informationen von dem Programmierer vorgegeben werden, wie beispielsweise eine gewünschte Achsstellung in einem bestimmten Bahnpunkt. Dies kann vorteilhaft sein, um bei einem redundanten Roboter die Roboterkonfiguration in einem bestimmten Punkt eindeutig vorzugeben. Hierbei ist zu erwähnen, dass ein redundanter Roboter ein solcher Roboter ist, der einen gewünschten Bahnpunkt mit einer gewünschten Ausrichtung mit unendlich vielen Roboterkonfigurationen erreichen kann, d.h. mit unendlich vielen Kombinationen der Achsstellungen der Roboterachsen A1-A7.

Die bekannten Offline-Programmierverfahren sind insbesondere bei redundanten Robotern sehr aufwendig, da viele Informationen manuell eingegeben werden müssen. Darüber hinaus ist stets eine Anpassung der Roboterbahn B erforderlich, sobald die Position des Lackierroboters 1 verändert wird.

Ferner ist auch keine reproduzierbare Programmierung möglich, da die Güte der Programmierung von der Erfahrung und dem Geschick des jeweiligen Programmierers abhängig ist.

Zum allgemeinen technischen Hintergrund der Erfindung ist auch hinzuweisen auf EP 2 072 195 A1, Hyotyniemi H: "Locally Controlled Optimization of Spray Painting Robot Trajectories" (19900820; 19900820-19900822, Bd. 1, 20. August 1990 (1990-08-20), Seiten 283-287, XP010278360), EP 2 315 093 A1, Heping Chen et al.: "Automated robot trajectory planning for spray painting of free-form surfaces in automotive manufacturing" (PROCEEDINGS, 2002 IEEE INTERNATIONAL CONFERENCE ON ROBOTICS AND AUTOMATION: May 11-15, 2002, Washington, D.C., IEEE SERVICE CENTER, PISCATAWAY, NJ, Bd. 1, 11. Mai 2002 (2002-05-11), Seite 450, XP032882428, DOI: 10.1109/ROBOT.2002.1013401, ISBN: 978-0-7803-7272-6), EP 1 332 841 A2 and Lueth T. C. ED - Institute of electrical and electronics engineers: "Automated planning of robot workcell layouts" (PROCEEDINGS OF THE INTERNATIONAL CONFERENCE ON ROBOTICS AND AUTOMATION NICE, May 12-14, 19; [PROCEEDINGS OF THE INTERNATIONAL CONFERENCE ON ROBOTICS AND AUTOMATION], Los Alamitos, IEEE COMP. SOC. PRESS, US, Bd. CONF. 8, 12. Mai 1992 (1992-05-12), Seiten 1103-1108, XP010027753, DOI: 10.1109/ROBOT.1992.220201, ISBN: 978-0-8186-2720-0) .

Schließlich offenbart Deng Sihao et al.: "Kinematic Optimization of Robot Trajectories for Thermal Spray Coating Application" (JOURNAL OF THERMAL SPRAY TECHNOLOGY, ASM INTERNATIONAL, MATERIAL PARK, US, Bd. 23, Nr. 8, 12. August 2014 (2014-08-12), Seiten 1382-1389, XP035375827, ISSN:

1059-9630, DOI: 10.1007/S1166-014-0137-7) ein Optimierungsverfahren zur Optimierung von Roboterbahnen. Hierbei werden jedoch nicht die Roboterkonfigurationen optimiert, sondern nur die Bahnpunkte selbst.

Der Erfindung liegt deshalb die Aufgabe zugrunde, ein verbessertes Optimierungsverfahren für einen Beschichtungsroboter zu schaffen. Weiterhin liegt der Erfindung die Aufgabe zugrunde, eine entsprechende Beschichtungsanlage zu schaffen.

Diese Aufgabe wird durch ein erfindungsgemäßes Optimierungsverfahren beziehungsweise durch eine erfindungsgemäße Beschichtungsanlage gemäß den unabhängigen Ansprüchen gelöst.

Das erfindungsgemäße Optimierungsverfahren dient zur Berechnung einer optimierten Bewegungsbahn eines Beschichtungsroboters, der ein Applikationsgerät über eine zu beschichtende Bauteiloberfläche führt.

Vorzugsweise handelt es sich bei dem Beschichtungsroboter um einen Lackierroboter, wie er an sich aus dem Stand der Technik bekannt ist und bereits vorstehend beschrieben wurde. Die Erfindung eignet sich jedoch in gleicherweise auch zur Optimierung der Bewegungsbahn anderer Typen von Beschichtungsrobotern, die beispielsweise zur Applikation von Dichtstoff, Dämmstoff, Klebstoff oder Sealing-Material eingesetzt werden.

Weiterhin ist zu erwähnen, dass das erfindungsgemäße Optimierungsverfahren vorzugsweise Anwendung findet bei der Lackierung von Kraftfahrzeugkarosseriebauteilen. Die Erfindung eignet sich jedoch in gleicher Weise auch für die Beschichtung anderer Typen von Bauteilen, was für den Fachmann offensichtlich ist.

Im Rahmen des erfindungsgemäßen Optimierungsverfahrens wird zunächst in Übereinstimmung mit dem Stand der Technik eine Bewegungsbahn vorgegeben, wobei die gewünschte Bewegungsbahn durch Bahnpunkte definiert wird, die als Stützstellen für die Bewegungsbahn dienen.

Zum einen definieren die Bahnpunktdaten der einzelnen Bahnpunkte die räumliche Position eines Referenzpunktes (TCP: Tool Center Point) des Applikationsgeräts an dem jeweiligen Bahnpunkt mindestens teilweise. Vorzugsweise handelt es sich bei dem Referenzpunkt um den programmierten Farbauftreffpunkt, der in einer bestimmten Entfernung axial vor dem Rotationszerstäuber liegt.

Zum anderen definieren die Bahnpunktdaten aber auch die jeweilige räumliche Ausrichtung des Applikationsgerätes an dem jeweiligen Bahnpunkt mindestens teilweise.

Vorzugsweise erfolgt die Festlegung der räumlichen Position und der räumlichen Ausrichtung des Applikationsgeräts in jedem Bahnpunkt vollständig und eindeutig, so dass die räumliche Position und die räumliche Ausrichtung des Applikationsgeräts (z.B. Rotationszerstäuber) in jedem Bahnpunkt eindeutig festgelegt ist.

Darüber hinaus sieht das erfindungsgemäße Optimierungsverfahren in Übereinstimmung mit dem Stand der Technik vor, dass für jeden der Bahnpunkte der Bewegungsbahn mögliche Roboterkonfigurationen berechnet werden. Der im Rahmen der Erfindung verwendete Begriff einer Roboterkonfiguration umfasst die Gesamtheit aller Roboterstellungen in den einzelnen beweglichen Roboterachsen. Bei einem 7-achsigen Lackierroboter - wie in Figur 1 - besteht jede Roboterkonfiguration also aus einem 7-dimensionalen Vektor, wobei die einzelnen Komponenten des Vektors die einzelnen Achsstellungen angeben.

Der im Rahmen der Erfindung verwendete Begriff einer Roboterachse stellt auf die Bewegungsfreiheitsgrade des Roboters ab. Hierbei kann es sich also beispielsweise um eine Linearbewegung oder um eine Dreh- bzw. Schwenkbewegung handeln.

Hierbei ist zu berücksichtigen, dass ein bestimmter Bahnpunkt mit einer bestimmten räumlichen Position oder einer bestimmten räumlichen Ausrichtung des Applikationsgerätes nicht nur durch eine einzige Roboterkonfiguration realisiert werden kann, sondern in der Regel durch unendlich viele verschiedene Roboterkonfigurationen, da der Roboter in der Regel redundant ist. Dies hat zur Folge, dass sich die verschiedenen Roboterkonfigurationen unterschiedlich gut eignen für die spätere Realisierung der Roboterbahn.

Beispielsweise ist es denkbar, dass eine bestimmte Roboterkonfiguration zu einer Kollision zwischen der Außenkontur des Roboters und Raumbegrenzungen (z.B. Kabinenwand, Außenkontur anderer Roboter) führt und deshalb nicht geeignet ist.

Darüber hinaus kann es vorkommen, das eine Roboterkonfiguration zwar nicht zu einer Kollision mit Raumbegrenzungen führt, aber nur einen geringen Abstand zu Raumbegrenzungen einhält, so dass geringfügige Stellungsänderungen des Roboters unter Umständen zu einer Kollision mit Raumbegrenzungen führen können.

Weiterhin besteht die Möglichkeit, dass eine bestimmte Roboterkonfiguration zwar ausreichend großen Abstand zu den Raumbegrenzungen hält, so dass keine Kollisionen drohen. Allerdings besteht dann die Möglichkeit, dass zwischen den aufeinander folgenden Bahnpunkten umfangreiche Änderungen der Achsstellungen erforderlich sind, was zu starken Roboterbewegungen führt und die erforderliche Bewegungszeit zwischen den aufeinander folgenden Bahnpunkten erhöht.

Die verschiedenen technisch möglichen Roboterkonfigurationen unterscheiden sich also hinsichtlich ihrer Güte, wobei die Güte durch einen Qualitätswert wiedergegeben werden kann. Das erfindungsgemäße Optimierungsverfahren sieht deshalb vor, dass für jede mögliche Roboterkonfiguration in den einzelnen Bahnpunkten jeweils ein bahnpunktbezogener Qualitätswert ermittelt wird, so dass die Güte der verschiedenen möglichen Roboterkonfigurationen verglichen werden kann.

Im Rahmen des erfindungsgemäßen Optimierungsverfahrens erfolgt dann eine Auswahl einer der möglichen Roboterkonfigurationen für die einzelnen Bahnpunkte in Abhängigkeit von dem bahnpunktbezogenen Qualitätswert der verschiedenen möglichen Roboterkonfigurationen. Es wird also in der Regel diejenige Roboterkonfiguration für den jeweiligen Bahnpunkt ausgewählt, die den besten Qualitätswert hat.

Es wurde bereits vorstehend erwähnt, dass sich die verschiedenen möglichen Roboterkonfigurationen hinsichtlich ihres Abstandes zu Raumbegrenzungen unterscheiden können. Die Berechnung des bahnpunktbezogenen Qualitätswertes umfasst deshalb vorzugsweise auch die Definition einer den Beschichtungsroboter umgebenden Störkontur. Beispielsweise kann diese Störkontur die Außenkonturen von Wänden und eines Bodens einer den Beschichtungsroboter umgebenden Beschichtungskabine wiedergeben. Darüber hinaus kann die Störkontur auch benachbarte Beschichtungsroboter wiedergeben. Weiterhin besteht die Möglichkeit, dass die Störkontur die Außenkontur benachbarter Handhabungsroboter wiedergibt. Schließlich kann die Störkontur auch das zu beschichtende Bauteil oder einen Förderer wiedergeben, der das Bauteil durch die Lackieranlage transportiert. Im Ergebnis gibt die Störkontur also die Außenkonturen von Raumbegrenzungen an, um eine Kollision damit zu vermeiden. Darüber hinaus wird dann vorzugsweise auch die Au-βenkontur des Beschichtungsroboters definiert, was beispielsweise anhand von CAD-Daten (CAD: Computer Aided Design) des Beschichtungsroboters möglich ist. Die Berechnung des Qualitätswertes für die einzelnen Roboterkonfigurationen erfolgt dann vorzugsweise in Abhängigkeit von der vorgegebenen Störkontur einerseits und in Abhängigkeit von der Außenkontur des Beschichtungsroboters andererseits, wobei natürlich auch die gewünschte räumliche Position und Ausrichtung des Beschichtungsroboters berücksichtigt wird.

Beispielsweise kann der bahnpunktbezogene Qualitätswert für die einzelnen Roboterkonfigurationen angeben, ob ein Einnehmen der Roboterkonfiguration zu einer Kollision mit der Störkontur führt. In diesem Fall ist der Qualitätswert binär, da er nur angibt, ob eine Kollision erfolgen würde oder nicht.

Vorzugsweise gibt der bahnpunktbezogene Qualitätswert jedoch für die einzelnen Roboterkonfigurationen den kleinsten Abstand an zwischen der Außenkontur des Beschichtungsroboters einerseits und der umgebenden Störkontur andererseits. In diesem Fall handelt es sich bei dem Qualitätswert also um einen kontinuierlichen Wert, da der Abstand vorzugsweise kontinuierlich berechnet wird.

Darüber hinaus kann der bahnpunktbezogene Qualitätswert auch die Manipulierbarkeit des Roboters in dem jeweiligen Bahnpunkt angeben. Eine geringe Manipulierbarkeit bedeutet, dass große Achsbewegungen nötig sind, um eine kleine Bewegung am TCP zu bewirken. Dies tritt zum Beispiel am Rand des Arbeitsraumes auf oder im Bereich von Singularitäten. Roboterkonfigurationen mit geringer Manipulierbarkeit sind, wenn möglich, zu vermeiden.

Es wurde vorstehend bereits kurz erwähnt, dass eine bestimmte Roboterkonfiguration im Hinblick auf die vorangegangenen oder folgenden Roboterkonfigurationen auf der Roboterbahn ungeeignet sein kann, da beispielsweise zwischen aufeinanderfolgenden Bahnpunkten umfangreiche Verstellungen des Roboters erforderlich sind. Es ist deshalb in der Regel nicht befriedigend, wenn die Auswahl der Roboterkonfiguration isoliert für jeden einzelnen Bahnpunkt erfolgt. Vielmehr ist es sinnvoll, wenn die Auswahl der optimalen Roboterkonfigurationen aus den möglichen Roboterkonfigurationen auch bahnpunktübergreifend erfolgt. Im Rahmen des erfindungsgemäßen Optimierungsverfahrens ist deshalb vorzugsweise vorgesehen, dass mehrere verschiedene mögliche Sequenzen von Roboterkonfigurationen berechnet werden, wobei der Beschichtungsroboter bei sequenziellem Abfahren aufeinander folgender Roboterkonfigurationen das Applikationsgerät mit der jeweils vorgegebenen räumlichen Position und der jeweils vorgegebenen räumlichen Ausrichtung entlang der vorgegebenen Bewegungsbahn führt. Es wird dann vorzugsweise ein sequenzbezogener Qualitätswert für die verschiedenen möglichen Sequenzen von Roboterkonfigurationen berechnet, so dass jeder Sequenz jeweils ein sequenzbezogener Qualitätswert zugeordnet ist.

Anschließend wird dann aus den verschiedenen möglichen Sequenzen von Roboterkonfigurationen eine Sequenz ausgewählt und zwar in Abhängigkeit von dem sequenzbezogenen Qualitätswert. Auf diese Weise kann beispielsweise auch erreicht werden, dass der Roboter beim Abfahren der Roboterbahn nur geringfügig und mit geringen Beschleunigungen verstellt werden muss.

So umfasst der sequenzbezogene Qualitätswert vorzugsweise auch die erforderlichen Achswegstrecken zwischen den aufeinander folgenden Roboterkonfigurationen der Sequenz von Roboterkonfigurationen. Die Auswahl der optimalen Sequenz aus den möglichen Sequenzen von Roboterkonfigurationen erfolgt dann vorzugsweise so, dass die erforderlichen Achswegstrecken zwischen den aufeinander folgenden Roboterkonfigurationen minimiert werden.

Darüber hinaus kann der sequenzbezogene Qualitätswert auch die erforderlichen Achsgeschwindigkeiten zwischen den aufeinanderfolgenden Roboterkonfigurationen der Sequenz von Roboterkonfigurationen wiedergeben. Die Auswahl der optimalen Sequenz von Roboterkonfigurationen aus den möglichen Sequenzen erfolgt dann vorzugsweise so, dass die erforderlichen Achsgeschwindigkeiten zwischen den aufeinanderfolgenden Roboterkonfigurationen minimiert werden.

Weiterhin kann der sequenzbezogene Qualitätswert auch die erforderlichen Achsbeschleunigungen zwischen den aufeinanderfolgenden Roboterkonfigurationen der Sequenz von Roboterkonfigurationen wiedergeben. Die Auswahl der optimalen Sequenz aus den möglichen Sequenzen erfolgt dann vorzugsweise so, dass die erforderlichen Achsbeschleunigungen zwischen den aufeinanderfolgenden Roboterkonfigurationen minimiert werden.

Beispielsweise kann der sequenzbezogene Qualitätswert auch angeben, welche Drehung des Applikationsgeräts zwischen den Bahnpunkten in einer Sequenz erforderlich ist.

Hierbei ist zu erwähnen, dass die Bahnpunktdaten der einzelnen Bahnpunkte die räumliche Ausrichtung des Applikationsgerätes nur hinsichtlich der Ausrichtung seiner Sprühachse definieren müssen, nicht dagegen hinsichtlich der Drehung des Applikationsgeräts um die Sprühachse. Dies ist möglich, weil der Sprühstrahl eines Rotationszerstäubers rotationssymmetrisch ist, so dass der Drehwinkel des Applikationsgeräts in Bezug auf seine Sprühstrahlachse nicht festgelegt werden muss.

Es besteht jedoch alternativ auch die Möglichkeit, dass die Bahnpunktdaten der einzelnen Bahnpunkte die räumliche Ausrichtung des Applikationsgeräts sowohl hinsichtlich der Ausrichtung seiner Sprühachse als auch hinsichtlich der Drehung des Applikationsgerätes um die Sprühachse definieren. Dies ist sinnvoll, wenn das Applikationsgerät einen Sprühstrahl abgibt, der hinsichtlich seiner Sprühstrahlachse nicht rotationssymmetrisch ist.

Weiterhin ist zu erwähnen, dass im Rahmen des Optimierungsverfahrens vorzugsweise nur die Roboterkonfigurationen für die bevorstehenden Bahnpunkte auf der vorgegebenen Bewegungsbahn optimiert werden. Die bereits optimierten Roboterkonfigurationen der vorhergehenden Bahnpunkte werden dagegen vorzugsweise nicht mehr optimiert, sondern nur zur Berechnung des sequenzbezogenen Qualitätswertes zugrunde gelegt. Das Optimierungsverfahren geht also in der Regel die einzelnen Bahnpunkte der Reihe nach ab und optimiert dann nacheinander für jeden Bahnpunkt die Roboterkonfiguration.

Ferner ist zu erwähnen, dass die Erfindung nicht nur Schutz beansprucht für das vorstehend beschriebene erfindungsgemäße Optimierungsverfahren. Vielmehr beansprucht die Erfindung auch Schutz für eine entsprechende Beschichtungsanlage, die neben einem Applikationsgerät (z.B. Rotationszerstäuber), einem Beschichtungsroboter (z.B. Lackierroboter) und einer Robotersteuerung auch eine Berechnungseinheit aufweist, wobei die Berechnungseinheit das vorstehend beschriebene Optimierungsverfahren ausführt, so dass diesbezüglich auf die vorstehende Beschreibung verwiesen werden kann.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:

Figur 1     eine Perspektivansicht eines Lackierroboters, wie er an sich aus dem Stand der Technik bekannt ist,

Figur 2     eine vereinfachte Darstellung einer Roboterbahn,

Figur 3     ein Flussdiagramm zur Verdeutlichung des erfindungsgemäßen Optimierungsverfahrens,

Figur 4     ein Flussdiagramm zur Verdeutlichung der Optimierung gemäß Schritt S3 in Figur 3,

Figur 5     ein Flussdiagramm zur Verdeutlichung des Schrittes S3.2 in Figur 4,

Figur 6     ein Flussdiagramm zur Verdeutlichung des Schrittes S3.4 in Figur 4.

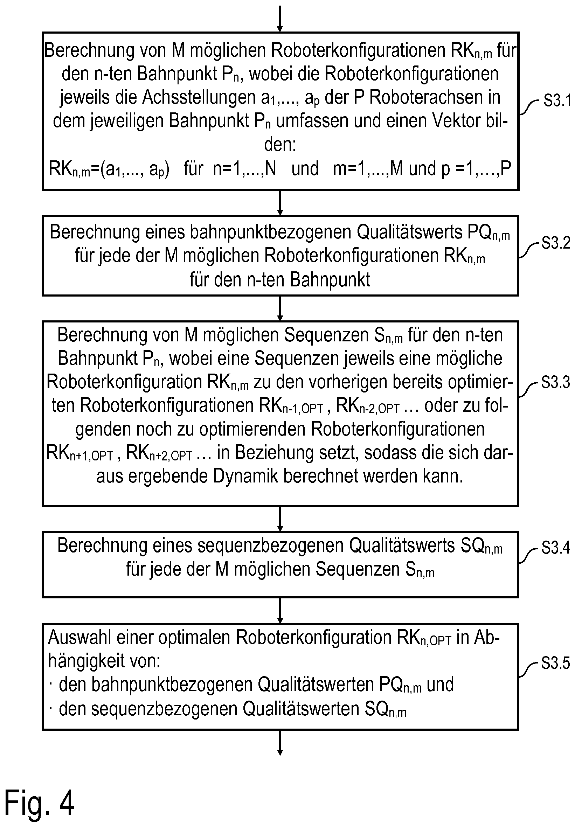

Nachfolgend wird also zunächst anhand von Figur 3 das erfindungsgemäße Optimierungsverfahren erläutert.

In einem ersten Schritt S1 wird zunächst die Bewegungsbahn B definiert, die von dem Farbauftreffpunkt TCP des Rotationszerstäubers 7 abgefahren werden soll. Jeder der Bahnpunkte $P_n$ wird hierbei durch Bahnpunktdaten definiert, die jeweils einen Vektor wie folgt bilden:

$$P_n = (XP_n, \quad YP_n, \quad ZP_n, \quad XR_n, \quad YR_n, \quad ZR_n)$$

Die Komponenten $XP_n$, $YP_n$, $ZP_n$ dieses Vektors definieren hierbei die räumliche Position des jeweiligen Bahnpunktes $P_n$. Die Komponenten $XR_n$, $YR_n$, $ZR_n$ definieren dagegen die jeweilige Ausrichtung des Rotationszerstäubers 7 und der Sprühstrahlachse 8 in dem jeweiligen Bahnpunkt $P_n$.

In einem nächsten Schritt S2 wird dann zunächst der erste Bahnpunkt P1 für die Optimierung der bevorstehenden Roboterbewegung ausgewählt.

In einem nächsten Schritt S3 wird dann in einer Schleife die Roboterstellung (Roboterkonfiguration) in dem n-ten Bahnpunkt optimiert, was noch eingehend beschrieben wird.

Im nächsten Schritt S4 in der Schleife wird dann der nächste Bahnpunkt auf der Bewegungsbahn ausgewählt.

In einem folgenden Schritt S5 wird dann geprüft, ob alle Bahnpunkte optimiert wurden. Falls dies der Fall ist, so ist das Optimierungsverfahren abgeschlossen.

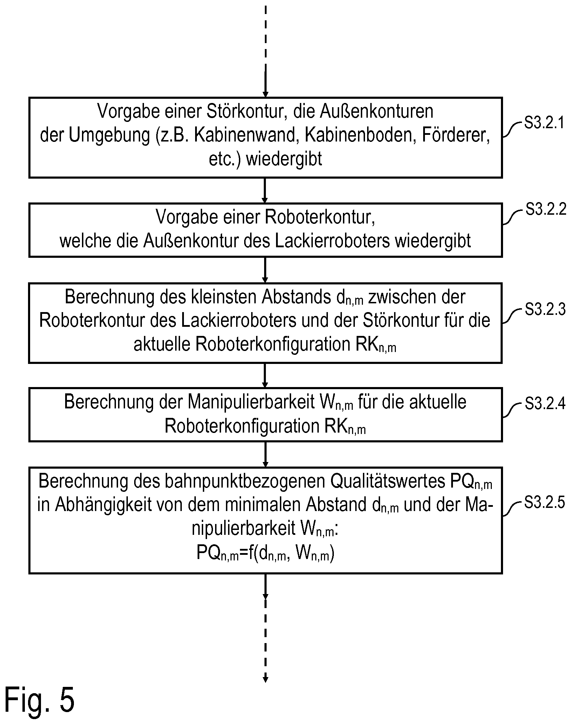

Im Folgenden wird nun die Optimierung der Roboterstellung (Roboterkonfiguration) in dem Schritt S3 gemäß Figur 3 näher beschrieben. Die einzelnen Verfahrensschritte in dem Schritt S3 sind in dem Flussdiagramm gemäß Figur 4 dargestellt.

In einem ersten Schritt S3.1 werden zunächst M mögliche Roboterkonfigurationen $RK_{n,m}$ für den jeweiligen n-ten Bahnpunkt $P_n$ berechnet. Die einzelnen Ro-

boterkonfigurationen $RK_{n,m}$ umfassen hierbei sämtliche Achsstellungen $a1,...., a7$ der Roboterachsen A1-A7 in dem jeweiligen Bahnpunkt $P_n$ und bilden einen Vektor wie folgt:

$$RK_{n,m}=(a1,...,a7)$$

In einem folgenden Schritt S3.2 wird dann für jede der M möglichen Roboterkonfigurationen $RK_{n,m}$ jeweils ein bahnpunktbezogener Qualitätswert $PQ_{n,m}$ berechnet.

Anschließend werden dann in Schritt S3.3 M mögliche Sequenzen $S_{n,m}$ für den n-ten Bahnpunkt $P_n$ berechnet, wobei eine Sequenz jeweils eine mögliche Roboterkonfiguration $RK_{n,m}$ zu den vorherigen bereits optimierten Roboterkonfigurationen oder zu folgenden noch zu optimierenden Roboterkonfigurationen in Beziehung setzt, so dass die sich daraus ergebende Roboterdynamik berechnet werden kann.

In einem folgenden Schritt S3.4 wird dann für jede der möglichen Sequenzen $S_{n,m}$ ein sequenzbezogener Qualitätswert $SQ_{n,m}$ berechnet.

In einem letzten Schritt S3.5 wird dann eine optimale Roboterkonfiguration $RK_{n,OPT}$ für den jeweiligen Bahnpunkt ausgewählt und zwar in Abhängigkeit von den bahnbezogenen Qualitätswerten $PQ_{n,m}$ und in Abhängigkeit von den sequenzbezogenen Qualitätswerten $SQ_{n,m}$.

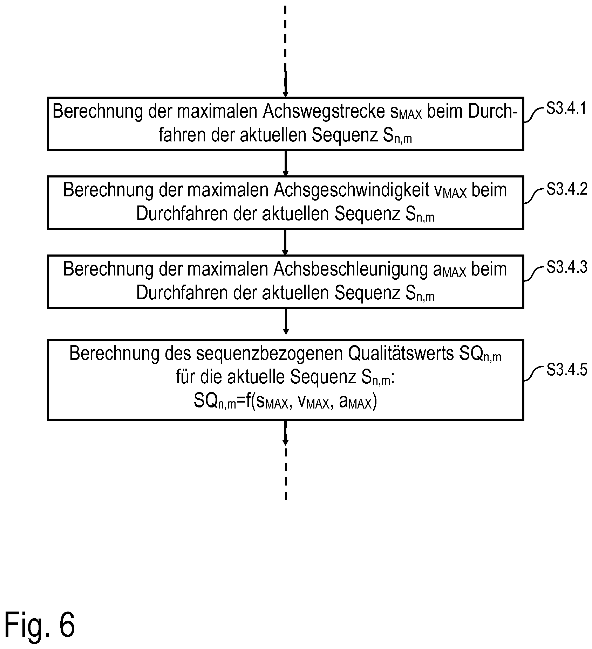

In dem Flussdiagramm gemäß Figur 5 ist die Berechnung des bahnpunktbezogenen Qualitätswert $PQ_{n,m}$ gemäß dem Schritt 3.2 in Figur 4 detaillierter dargestellt.

In einem ersten Schritt S3.2.1 wird zunächst eine Störkontur vorgegeben, wobei die Störkontur die Außenkonturen der Umgebung (z.B. Kabinenwand, Kabinenboden, Förderer, etc.) wiedergibt, um Kollisionen vermeiden zu können.

Darüber hinaus wird in einem Schritt S3.2.2 eine Roboterkontur vorgegeben, welche die Außenkontur des Lackierroboters 1 wiedergibt, was ebenfalls für die Vermeidung von Kollisionen wichtig ist.

In einem Schritt S3.2.3 wird dann der kleinste Abstand $d_{n,m}$ zwischen der Roboterkontur des Lackierroboters 1 und der Störkontur für die aktuelle Roboterkonfiguration $RK_{n,m}$ berechnet.

Darüber hinaus wird in einem Schritt S3.2.4 die Manipulierbarkeit $W_{n,m}$ für die aktuelle Roboterkonfiguration $RK_{n,m}$ berechnet.

In einem Schritt S3.2.5 wird dann ein bahnpunktbezogener Qualitätswert $PQ_{n,m}$ berechnet und zwar in Abhängigkeit von dem minimalen Abstand $d_{n,m}$ gegenüber der Störkontur und in Abhängigkeit von der Manipulierbarkeit $W_{n,m}$ und zwar nach folgender Formel:

$$PQ_{n,m}=f(d_{n,m}, W_{n,m})$$

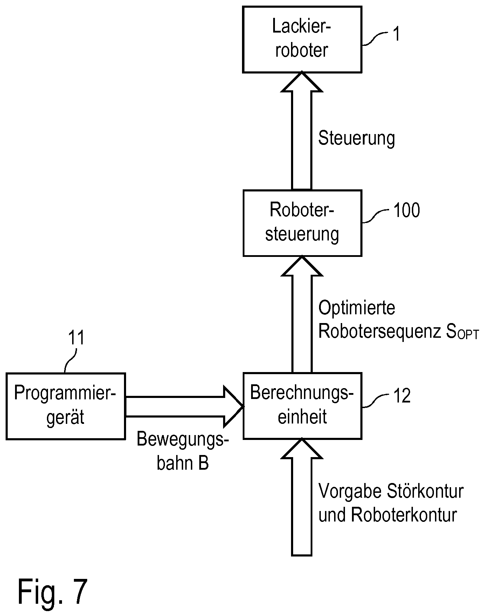

Figur 6 zeigt die einzelnen Schritte, die in dem Verfahrensschritt S3.4 gemäß Figur 4 durchlaufen werden, um den sequenzbezogenen Qualitätswert $SQ_{n,m}$ zu berechnen.

In einem ersten Schritt S3.4.1 wird die maximale Achswegstrecke $S_{MAX}$ berechnet, welche die Roboterachsen beim Durchfahren der aktuellen Sequenz $S_{n,m}$ zurücklegen müssen.

In einem Schritt S3.4.2 wird dann die maximale Achsgeschwindigkeit $V_{MAX}$ beim Durchfahren der aktuellen Sequenz $S_{n,m}$ berechnet.

Ferner wird in einem Schritt S3.4.3 die maximale Achsbeschleunigung $a_{MAX}$ berechnet, die beim Durchfahren der aktuellen Sequenz $S_{n,m}$ erreicht wird.

Aus diesen Werten wird dann in einem Schritt S3.4.5 ein sequenzbezogener Qualitätswert $SQ_{n,m}$ für die aktuelle Sequenz $S_{n,m}$ berechnet und zwar nach folgender Formel:

$$SQ_{n,m}=f(s_{MAX}, v_{MAX}, a_{MAX}).$$

Figur 7 zeigt eine vereinfachte, schematische Darstellung einer erfindungsgemäßen Lackieranlage, die das vorstehend beschriebene erfindungsgemäße Optimierungsverfahren ausführen kann.

So weist die Lackieranlage neben dem bereits vorstehend beschriebenen Lackierroboter 1 eine Robotersteuerung 10 und ein Programmiergerät 11 auf, wobei dieser Aufbau aus dem Stand der Technik bekannt ist und deshalb nicht mehr beschrieben werden muss.

Mittels des Programmiergeräts 11 wird die gewünschte Bewegungsbahn B des Roboters vorgegeben. Die erfindungsgemäße Lackieranlage weist jedoch zusätzlich eine Berechnungseinheit 12 auf, die das erfindungsgemäße Optimierungsverfahren ausführt und aus der vorgegebenen Bewegungsbahn B eine optimierte Robotersequenz $S_{OPT}$ berechnet, wie vorstehend beschrieben wurde. Hierbei berücksichtigt die Berechnungseinheit 12 eine vorgegebene Störkontur und die eigene Außenkontur des Lackierroboters 1.

Hierbei ist zu erwähnen, dass die Berechnungseinheit 12 wahlweise als separate Hardware-Komponente oder als Software realisiert werden kann, wobei die Software beispielsweise auch in die Robotersteuerung 10 integriert sein kann.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den jeweils in Bezug genommenen Ansprüchen und insbesondere auch unabhängig von den Merkmalen des Hauptanspruchs.

Bezugszeichenliste:

| | |
|---|---|
| 1 | Lackierroboter |
| 2 | Roboterbasis |
| 3 | Drehbares Roboterglied |
| 4 | Proximaler Roboterarm ("Arm 1") |
| 5 | Distaler Roboterarm ("Arm 2") |
| 6 | Roboterhandachse |
| 7 | Rotationszerstäuber |
| 8 | Sprühstrahlachse |
| 9 | Linearfarbwechsler |
| 10 | Robotersteuerung |
| 11 | Programmiergerät |
| 12 | Berechnungseinheit |
| A1-A7 | Roboterachsen |
| B | Programmierte Roboterbahn |
| P1-P6 | Bahnpunkte |
| TCP | Programmierter Farbauftreffpunkt (Tool Center Point) |

**Patentansprüche**

**1.** Optimierungsverfahren zur Berechnung einer optimierten Bewegungsbahn (B) eines Beschichtungsroboters (1), der ein Applikationsgerät (7) über eine zu beschichtende Bauteiloberfläche führt, mit den folgenden Schritten:

a) Definition von aufeinander folgenden Bahnpunkten (P1-P6) der Bewegungsbahn (B) durch Bahnpunktdaten, wobei die Bahnpunktdaten für den jeweiligen Bahnpunkt

a1) zum einen die räumliche Position ($XP_n$, $YP_n$, $ZP_n$) eines Referenzpunkts (TCP) des Applikationsgeräts (7) an dem jeweiligen Bahnpunkt ($P_n$) mindestens teilweise definieren, insbesondere eines Farbauftreffpunkts, und
a2) zum anderen die räumliche Ausrichtung ($XR_n$, $YR_n$, $ZR_n$) des Applikationsgeräts (7) an dem jeweiligen Bahnpunkt ($P_n$) mindestens teilweise definieren, und

b) Berechnung möglicher Roboterkonfigurationen für die einzelnen Bahnpunkte der Bewegungsbahn (B),

b1) wobei jede Roboterkonfiguration jeweils alle Achsstellungen (a1-a7) aller Roboterachsen (A1-A7) umfasst und
b2) zumindest einige der Bahnpunkte (P1-P6) jeweils wahlweise durch mehrere verschiedene Roboterkonfigurationen erreichbar sind,

**gekennzeichnet durch** folgenden Schritt:

c) Berechnung eines bahnpunktbezogenen Qualitätswerts ($PQ_{n,m}$) jeweils einzeln für die verschiedenen möglichen Roboterkonfigurationen der einzelnen Bahnpunkte, so dass jeder Roboterkonfiguration jeweils ein Qualitätswert ($PQ_{n,m}$) zugeordnet ist, und
d) Auswahl einer der möglichen Roboterkonfigurationen für die einzelnen Bahnpunkte in Abhängigkeit von dem bahnpunktbezogenen Qualitätswert ($PQ_{n,m}$) der verschiedenen möglichen Roboterkonfigurationen.

**2.** Optimierungsverfahren nach Anspruch 1, **dadurch gekennzeichnet, dass** die Berechnung des bahnpunktbezogenen Qualitätswerts folgende Schritte umfasst:

a) Definition einer den Beschichtungsroboter umgebenden Störkontur, wobei die Störkontur vorzugsweise die Außenkonturen folgender Objekte wiedergibt:

a1) Wände und Boden einer den Beschichtungsroboter (1) umgebenden Beschichtungskabine,
a2) benachbarte Beschichtungsroboter,
a3) benachbarte Handhabungsroboter,
a4) das zu beschichtende Bauteil,

b) Definition einer Außenkontur des Beschichtungsroboters (1), und
c) Berechnung des Qualitätswerts ($PQ_{n,m}$) für die einzelnen Roboterkonfigurationen in Abhängigkeit von der vorgegebenen Störkontur und in Abhängigkeit von der Außenkontur des Beschichtungsroboters (1).

**3.** Optimierungsverfahren nach Anspruch 2, **dadurch gekennzeichnet,**

a) **dass** der bahnpunktbezogene Qualitätswert ($PQ_{n,m}$) für die einzelnen Roboterkonfigurationen angibt, ob eine Realisierung der Roboterkonfiguration zu einer Kollision mit der Störkontur führt, und/oder
b) **dass** der bahnpunktbezogene Qualitätswert ($PQ_{n,m}$) für die einzelnen Roboterkonfigurationen den kleinsten Abstand ($d_{n,m}$) angibt zwischen der Außenkontur des Beschichtungsroboters (1) einerseits und der Störkontur andererseits.

**4.** Optimierungsverfahren nach einem der vorhergehenden Ansprüche, **dadurch gekennzeichnet,**

a) **dass** der bahnpunktbezogene Qualitätswert ($PQ_{n,m}$) die Manipulierbarkeit des Beschichtungsroboters (1) in dem jeweiligen Bahnpunkt ($P_n$) wiedergibt, und

b) **dass** die Manipulierbarkeit ($W_{n,m}$) angibt, in welchem Ausmaß der Beschichtungsroboter (1) in dem Bahnpunkt ($P_n$) verschiedene Roboterkonfigurationen annehmen kann, so dass die Manipulierbarkeit ($W_{n,m}$) in einer singulären Roboterstellung Null ist.

5. Optimierungsverfahren nach einem der vorhergehenden Ansprüche, **gekennzeichnet durch** folgende Schritte:

a) Berechnung von verschiedenen möglichen Sequenzen ($S_{n,m}$) von Roboterkonfigurationen, wobei der Beschichtungsroboter (1) beim sequentiellen Abfahren der Sequenz ($S_{n,m}$) von Roboterkonfigurationen das Applikationsgerät (7) mit der jeweils vorgegebenen räumlichen Position und der jeweils vorgegebenen räumlichen Ausrichtung entlang der vorgegebenen Bewegungsbahn (B) führt,

b) Berechnung eines sequenzbezogenen Qualitätswerts ($SQ_{n,m}$) für die verschiedenen möglichen Sequenzen von Roboterkonfigurationen, so dass jeder Sequenz ($S_{n,m}$) jeweils ein sequenzbezogener Qualitätswert ($SQ_{n,m}$) zugeordnet ist, und

c) Auswahl einer der verschiedenen möglichen Sequenzen ($S_{n,m}$) von Roboterkonfigurationen in Abhängigkeit von dem sequenzbezogenen Qualitätswert ($SQ_{n,m}$) .

6. Optimierungsverfahren nach Anspruch 5, **dadurch gekennzeichnet,**

a) **dass** der sequenzbezogene Qualitätswert ($SQ_{n,m}$) die erforderlichen Achswegstrecken ($S_{MAX}$) zwischen den aufeinander folgenden Roboterkonfigurationen der Sequenz von Roboterkonfigurationen wiedergibt, und

b) **dass** die Auswahl einer der möglichen Sequenzen ($S_{n,m}$) von Roboterkonfigurationen so erfolgt, dass die erforderlichen Achswegstrecken ($S_{MAX}$) zwischen den aufeinander folgenden Roboterkonfigurationen minimiert werden.

7. Optimierungsverfahren nach Anspruch 5 oder 6, **dadurch gekennzeichnet,**

a) **dass** der sequenzbezogene Qualitätswert ($SQ_{n,m}$) die erforderlichen Achsgeschwindigkeiten ($v_{MAX}$) zwischen den aufeinander folgenden Roboterkonfigurationen der Sequenz ($S_{n,m}$) von Roboterkonfigurationen wiedergibt, und

b) **dass** die Auswahl einer der möglichen Sequenzen ($S_{n,m}$) von Roboterkonfigurationen so erfolgt, dass die erforderlichen Achsgeschwindigkeiten ($v_{MAX}$) zwischen den aufeinander folgenden Roboterkonfigurationen minimiert werden.

8. Optimierungsverfahren nach einem der Ansprüche 5 bis 7, **dadurch gekennzeichnet,**

a) **dass** der sequenzbezogene Qualitätswert ($SQ_{n,m}$) die erforderlichen Achsbeschleunigungen ($a_{MAX}$) zwischen den aufeinander folgenden Roboterkonfigurationen der Sequenz von Roboterkonfigurationen wiedergibt, und

b) **dass** die Auswahl einer der möglichen Sequenzen ($S_{n,m}$) von Roboterkonfigurationen so erfolgt, dass die erforderlichen Achsbeschleunigungen ($a_{MAX}$) zwischen den aufeinander folgenden Roboterkonfigurationen minimiert werden.

9. Optimierungsverfahren nach einem der Ansprüche 5 bis 8, **dadurch gekennzeichnet, dass** der sequenzbezogene Qualitätswert ($SQ_{n,m}$) angibt, welche Drehung des Applikationsgeräts (7) zwischen den Bahnpunkten (P1-P6) in einer Sequenz ($S_{n,m}$) erforderlich ist.

10. Optimierungsverfahren nach einem der vorhergehenden Ansprüche, **dadurch gekennzeichnet,**

a) **dass** die Bahnpunktdaten der einzelnen Bahnpunkte die räumliche Ausrichtung des Applikationsgeräts (7) nur hinsichtlich der Ausrichtung seiner Sprühachse definieren nicht dagegen hinsichtlich der Drehung des Applikationsgeräts (7) um die Sprühachse, oder

b) **dass** die Bahnpunktdaten der einzelnen Bahnpunkte die räumliche Ausrichtung des Applikationsgeräts (7) sowohl hinsichtlich der Ausrichtung seiner Sprühachse definieren als auch hinsichtlich der Drehung des Applikationsgeräts (7) um die Sprühachse.

11. Optimierungsverfahren nach einem der vorhergehenden Ansprüche, **dadurch gekennzeichnet,**

a) **dass** nur die Roboterkonfigurationen für die bevorstehenden Bahnpunkte auf der vorgegebenen Bewegungsbahn (B) optimiert werden, und

b) **dass** die bereits optimierten Roboterkonfigurationen der vorhergehenden Bahnpunkte nicht mehr optimiert sondern nur zur Berechnung des sequenzbezogenen Qualitätswertes ($SQ_{n,m}$) zugrunde gelegt werden.

12. Beschichtungsanlage zur Beschichtung von Bauteilen, insbesondere Lackieranlage zur Lackierung von Kraftfahrzeugkarosseriebauteilen, mit

a) einem Applikationsgerät (7) zur Applikation eines Beschichtungsmittels, insbesondere einem Rotationszerstäuber zum Absprühen eines Lacks,
b) einem mehrachsigen, redundanten Beschichtungsroboter (1) zur Führung des Applikationsgeräts (7),
c) einer Robotersteuerung (10) zur Steuerung des Beschichtungsroboters (1), so dass das Applikationsgerät (7) eine vorgegebene Bewegungsbahn (B) abfährt,

c1) wobei die Bewegungsbahn (B) durch Bahnpunktdaten für eine Vielzahl von aufeinander folgenden Bahnpunkten (P1-P6) definiert ist,
c2) wobei die Bahnpunktdaten für den jeweiligen Bahnpunkt ($P_n$) zum einen die räumliche Ausrichtung des Applikationsgeräts (7) an dem jeweiligen Bahnpunkt ($P_n$) definieren und zum anderen die räumliche Position eines Referenzpunkts (TCP) des Applikationsgeräts (7) an dem jeweiligen Bahnpunkt ($P_n$) definieren, insbesondere eines Farbauftreffpunkts,

d) einer Berechnungseinheit (12) zur Berechnung von möglichen Roboterkonfigurationen für die einzelnen Bahnpunkte der Bewegungsbahn (B),

d1) wobei jede Roboterkonfiguration jeweils alle Achsstellungen (a1-a7) aller Roboterachsen (A1-A7) umfasst und
d2) zumindest einige der Bahnpunkte (P1-P6) jeweils wahlweise durch mehrere verschiedene Roboterkonfigurationen erreichbar sind,

**dadurch gekennzeichnet,**

e) dass die Berechnungseinheit (12) jeweils einen bahnpunktbezogenen Qualitätswert ($PQ_{n,m}$) für die verschiedenen möglichen Roboterkonfigurationen der einzelnen Bahnpunkte berechnet, so dass jeder Roboterkonfiguration jeweils ein Qualitätswert ($PQ_{n,m}$) zugeordnet ist,
f) dass die Berechnungseinheit (12) eine der möglichen Roboterkonfigurationen für die einzelnen Bahnpunkte in Abhängigkeit von dem bahnpunktbezogenen Qualitätswert ($PQ_{n,m}$) der verschiedenen möglichen Roboterkonfigurationen auswählt.

13. Beschichtungsanlage nach Anspruch 12,

**dadurch gekennzeichnet,**

a) **dass** die Berechnungseinheit (12) verschiedene mögliche Sequenzen ($S_{n,m}$) von Roboterkonfigurationen berechnet, wobei der Beschichtungsroboter (1) beim sequentiellen Abfahren der Sequenz ($S_{n,m}$) von Roboterkonfigurationen das Applikationsgerät (7) mit der jeweils vorgegebenen räumliche Position und der jeweils vorgegebenen räumlichen Ausrichtung führt,
b) **dass** die Berechnungseinheit (12) einen sequenzbezogenen Qualitätswert ($SQ_{n,m}$) für die verschiedenen möglichen Sequenzen ($S_{n,m}$) von Roboterkonfigurationen berechnet, so dass jeder Sequenz ($S_{n,m}$) jeweils ein sequenzbezogener Qualitätswert ($SQ_{n,m}$) zugeordnet ist, und
c) **dass** die Berechnungseinheit (12) eine der verschiedenen möglichen Sequenzen ($S_{n,m}$) von Roboterkonfigurationen in Abhängigkeit von dem sequenzbezogenen Qualitätswert ($SQ_{n,m}$) auswählt.

**Claims**

1. Optimisation method for calculating an optimised movement path (B) of a coating robot (1) which guides an application device (7) over a component surface to be coated, comprising the following steps:

a) defining successive path points (P1-P6) of the movement path (B) through path point data, wherein the path point data for each path point

a1) firstly at least partially define the spatial position ($XP_n$, $YP_n$, $ZP_n$) of a reference point (TCP) of the application device (7) at the respective path point ($P_n$), in particular a paint impact point, and
a2) secondly at least partially define the spatial orientation ($XR_n$, $YR_n$, $ZR_n$) of the application device (7) at the respective path point ($P_n$), and

b) calculating possible robot configurations for the individual path points of the movement path (B),

b1) wherein each robot configuration comprises all the axis positions (a1-a7) of all the robot axes (A1-A7) and
b2) at least some of the path points (P1-P6) are respectively optionally achievable by means of a plurality of different robot configurations,

**characterised by** the following step:

c) calculating a path point-related quality value $(PQ_{n,m})$ respectively individually for the different possible robot configurations of the individual path points, so that a quality value $(PQ_{n,m})$ is assigned to each robot configuration, and
d) selecting one of the possible robot configurations for the individual path points dependent upon the path point-related quality value $(PQ_{n,m})$ of the different possible robot configurations.

2. Optimisation method according to claim 1, **characterised in that** the calculation of the path point-related quality value comprises the following steps:

   a) defining an interference contour surrounding the coating robot, wherein the interference contour preferably represents the outer contours of the following objects:

   a1) walls and floor of a coating booth surrounding the coating robot (1),
   a2) adjacent coating robots,
   a3) adjacent handling robots,
   a4) the component to be coated,

   b) defining an outer contour of the coating robot (1),
   and
   c) calculating the quality value $(PQ_{n,m})$ for the individual robot configurations, dependent upon the pre-defined interference contour and dependent upon the outer contour of the coating robot (1).

3. Optimisation method according to claim 2, **characterised in**

   a) **that** the path point-related quality value $(PQ_{n,m})$ for the individual robot configurations indicates whether a realisation of the robot configuration leads to a collision with the interference contour, and/or
   b) **that** the path point-related quality value $(PQ_{n,m})$ indicates for the individual robot configurations the smallest spacing $(d_{n,m})$ between, firstly, the outer contour of the coating robot (1) and, secondly, the interference contour.

4. Optimisation method according to one of the preceding claims, **characterised in**

   a) **that** the path point-related quality value $(PQ_{n,m})$ represents the manipulability of the coating robot (1) at the respective path point $(P_n)$, and
   b) **that** the manipulability $(W_{n,m})$ indicates the extent to which the coating robot (1) can assume different robot configurations at the path point

$(P_n)$, so that the manipulability $(W_{n,m})$ at a singular robot position is zero.

5. Optimisation method according to one of the preceding claims, **characterized by** the following steps:

   a) calculating different possible sequences $(S_{n,m})$ of robot configurations, wherein the coating robot (1), on sequential performance of the sequence $(S_{n,m})$ of robot configurations, guides the application device (7) with the respective pre-determined spatial position and the respective pre-determined spatial orientation along the pre-determined movement path (B),
   b) calculating a sequence-related quality value $(SQ_{n,m})$ for the different possible sequences of robot configurations, so that a sequence-related quality value $(SQ_{n,m})$ is assigned to each sequence $(S_{n,m})$, and
   c) selecting one of the different possible sequences $(S_{n,m})$ of robot configurations dependent upon the sequence-related quality value $(SQ_{n,m})$.

6. Optimisation method according to claim 5, **characterised in**

   a) **that** the sequence-related quality value $(SQ_{n,m})$ represents the required axis travel distances $(S_{MAX})$ between the successive robot configurations of the sequence of robot configurations, and
   b) **that** the selection of one of the possible sequences $(S_{n,m})$ of robot configurations takes place such that the required axis travel distances $(S_{MAX})$ between the successive robot configurations are minimised.

7. Optimisation method according to claim 5 or 6, **characterised in**

   a) **that** the sequence-related quality value $(SQ_{n,m})$ represents the required axis velocities $(v_{MAX})$ between the successive robot configurations of the sequence $(S_{n,m})$ of robot configurations, and
   b) **that** the selection of one of the possible sequences $(S_{n,m})$ of robot configurations takes place such that the required axis velocities $(v_{MAX})$ between the successive robot configurations are minimised.

8. Optimisation method as claimed in one of the claims 5 to 7, **characterised in**

   a) **that** the sequence-related quality value $(SQ_{n,m})$ represents the required axis accelerations $(a_{MAX})$ between the successive robot configurations of the sequence of robot configurations, and

b) **that** the selection of one of the possible sequences ($S_{n,m}$) of robot configurations takes place such that the required axis accelerations ($a_{MAX}$) between the successive robot configurations are minimised.

9. Optimisation method according to one of the claims 5 to 8, **characterised in that** the sequence-related quality value ($SQ_{n,m}$) indicates which rotation of the application device (7) is required between the path points (P1-P6) in a sequence ($S_{n,m}$).

10. Optimisation method according to one of the preceding claims, **characterised in**

a) **that** the path point data of the individual path points define the spatial orientation of the application device (7) only with regard to the orientation of its spray axis, but not with regard to the rotation of the application device (7) about the spray axis, or

b) **that** the path point data of the individual path points define the spatial orientation of the application device (7) both with regard to the orientation of its spray axis as well as with regard to the rotation of the application device (7) about the spray axis.

11. Optimisation method according to one of the preceding claims, **characterised in**

a) **that** only the robot configurations for the forthcoming path points are optimised on the predetermined movement path (B), and

b) **that** the already optimised robot configurations of the preceding path points are no longer be optimised, but only made the basis for calculating the sequence-related quality value ($SQ_{n,m}$).

12. Coating system for coating components, in particular a painting system for painting motor vehicle bodywork components, comprising

a) an application device (7) for applying a coating medium, in particular a rotary atomiser for spraying a paint,

b) a multi-axis coating robot (1) with redundancy for guiding the application device (7),

c) a robot control system (10) for controlling the coating robot (1), so that the application device (7) travels along a pre-determined movement path (B),

c1) wherein the movement path (B) is defined by path point data for a plurality of successive path points (P1-P6),

c2) wherein the path point data for each path point ($P_n$) firstly define the spatial orientation of the application device (7) at the respective path point ($P_n$) and, secondly, define the spatial position of a reference point (TCP) of the application device (7) at the respective path point ($P_n$), in particular a paint impact point,

d) a computer unit (12) for calculating possible robot configurations for the individual path points of the movement path (B),

d1) wherein each robot configuration comprises all the axis positions (a1-a7) of all the robot axes (A1-A7) and

d2) at least some of the path points (P1-P6) are respectively optionally achievable by means of a plurality of different robot configurations,

**characterised in**

e) that the computer unit (12) calculates a path point-related quality value ($PQ_{n,m}$) for each of the different possible robot configurations of the individual path points, so that a quality value ($PQ_{n,m}$) is assigned to each robot configuration,

f) that the computer unit (12) selects one of the possible robot configurations for the individual path points dependent upon the path point-related quality value ($PQ_{n,m}$) of the different possible robot configurations.

13. Coating system according to claim 12, **characterised in**

a) **that** the computer unit (12) calculates different possible sequences ($S_{n,m}$) of robot configurations, wherein the coating robot (1), on sequential performance of the sequence ($S_{n,m}$) of robot configurations, guides the application device (7) with the respectively pre-determined spatial position and the respectively pre-determined spatial orientation,

b) **that** the computer unit (12) calculates a sequence-related quality value ($SQ_{n,m}$) for the different possible sequences ($S_{n,m}$) of robot configurations, so that a sequence-related quality value ($SQ_{n,m}$) is assigned to each sequence ($S_{n,m}$), and

c) **that** the computer unit (12) selects one of the different possible sequences ($S_{n,m}$) of robot configurations dependent upon the sequence-related quality value ($SQ_{n,m}$).

**Revendications**

1. Procédé d'optimisation pour le calcul d'une trajectoire optimisée (B) d'un robot de revêtement (1), qui guide un appareil d'application (7) au-dessus d'une surface de composant à revêtir, avec les étapes suivantes :

   a) définition de points de trajectoire successifs (P1 - P6) de la trajectoire (B) par des données de points de trajectoire, dans lequel les données de points de trajectoire

   a1) définissent au moins partiellement, d'une part, la position spatiale ($XP_n$, $YP_n$, $ZP_n$) d'un point de référence (TCP) de l'appareil d'application (7) au niveau du point de trajectoire ($P_n$) correspondant, plus particulièrement d'un point d'impact de la peinture et

   a2) définissent au moins partiellement, d'autre part, l'orientation spatiale ($XR_n$, $YR_n$, $ZR_n$) de l'appareil d'application (7) au niveau du point de trajectoire ($P_n$) correspondant et

   b) calcul de configurations possible du robot pour les différents points de la trajectoire (B),

   b1) dans lequel chaque configuration du robot comprend respectivement toutes les positions axiales (a1 - a7) de tous les axes du robot (A1 - A7) et

   b2) au moins certains des points de la trajectoire (P1 - P6) peuvent être atteints au choix par plusieurs configurations différentes du robot,

   **caractérisé par** l'étape suivante :

   c) calcul d'une valeur de qualité liée au point de trajectoire ($PQ_{n,n}$) individuellement pour les différentes configurations possibles du robot au niveau des différents points de la trajectoire, de façon à ce que, à chaque configuration du robot, corresponde une valeur de qualité ($PQ_{n,n}$) et

   d) sélection d'une des configurations possibles du robot pour les différents points de la trajectoire en fonction de la valeur de qualité liée au point de trajectoire ($PQ_{n,n}$) des différentes configurations possibles du robot.

2. Procédé d'optimisation selon la revendication 1, **caractérisé en ce que** le calcul de la valeur de qualité liée au point de trajectoire comprend les étapes suivantes :

   a) définition d'un contour perturbateur entourant le robot de revêtement, dans lequel le contour perturbateur reproduit de préférence les contours externes des objets suivants :

   a1) parois et fond d'une cabine de revêtement entourant le robot de revêtement (1),
   a2) robots de revêtement voisins,
   a3) robots de manipulation voisins,
   a4) le composant à revêtir,

   b) définition d'un contour externe du robot de revêtement (1),
   et
   c) calcul de la valeur de qualité ($Pq_{n,n}$) pour les différentes configurations du robot en fonction du contour perturbateur prédéterminé et en fonction du contour externe du robot de revêtement (1).

3. Procédé d'optimisation selon la revendication 2, **caractérisé en ce que**

   a) la valeur de qualité liée au point de trajectoire ($PQ_{n,n}$) pour les différentes configurations du robot indique si une réalisation de la configuration du robot mène à une collision avec le contour perturbateur et/ou
   b) la valeur de qualité liée au point de trajectoire ($PQ_{n,n}$) pour les différentes configurations du robot indique la distance la plus petite ($d_{n,n}$) entre le contour externe du robot de revêtement (1) d'une part et le contour perturbateur d'autre part.

4. Procédé d'optimisation selon l'une des revendications précédentes, **caractérisé en ce que**

   a) la valeur de qualité liée au point de trajectoire ($PQ_{n,n}$) reproduit la possibilité de manipulation du robot de revêtement (1) au niveau du point de trajectoire ($P_n$) correspondant et
   b) la possibilité de manipulation ($W_{n,m}$) indique dans quelle mesure le robot de revêtement (1) peut adopter des configurations de robot différentes au niveau du point de trajectoire ($P_n$), de sorte que la possibilité de manipulation ($W_{n,m}$) soit nulle dans une position spécifique du robot.

5. Procédé d'optimisation selon l'une des revendications précédentes, **caractérisé par** les étapes suivantes :

   a) calcul de différentes séquences possibles ($S_{n,m}$) de configurations du robot, dans lequel le robot de revêtement (1), lors d'une exécution séquentielle de la séquence ($S_{n,m}$) de configurations du robot, guide l'appareil d'application (7), avec la position spatiale respective prédéterminée et l'orientation spatiale respective prédéterminée, le long de la trajectoire (B) prédéterminée,

b) calcul d'une valeur de qualité liée à la séquence ($SQ_{n,m}$) pour les différentes séquences possibles de configurations du robot, de sorte que, à chaque séquence ($S_{n,m}$), corresponde une valeur de qualité liée à la séquence ($SQ_{n,m}$) et

c) sélection d'une des différentes séquences possibles ($S_{n,m}$) de configurations du robot en fonction de la valeur de qualité liée à la séquence ($SQ_{n,m}$).

6. Procédé d'optimisation selon la revendication 5, **caractérisé en ce que**

a) la valeur de qualité liée à la séquence ($SQ_{n,m}$) reproduit les distances axiales nécessaires ($S_{MAX}$) entre les configurations successives de la séquence de configurations du robot et

b) la sélection d'une des séquences possibles ($S_{n,m}$) de configurations du robot a lieu de façon à ce que les distances entre les configurations successives du robot soient minimisées.

7. Procédé d'optimisation selon la revendication 5 ou 6, **caractérisé en ce que**

a) la valeur de qualité liée à la séquence ($SQ_{n,m}$) reproduit les vitesses axiales ($V_{MAX}$) nécessaires entre les configurations successives de la séquence ($S_{n,m}$) de configurations du robot et

b) la sélection d'une des séquences possibles ($S_{n,m}$) de configurations du robot a lieu de façon à ce que les vitesses axiales ($V_{MAX}$) nécessaires entre les configurations successives du robot soient minimisées.

8. Procédé d'optimisation selon l'une des revendications 5 à 7, **caractérisé en ce que**

a) la valeur de qualité liée à la séquence ($SQ_{n,m}$) reproduit les accélérations axiales ($a_{MAX}$) nécessaires entre les configurations successives de la séquence de configurations du robot et

b) la sélection d'une des séquences possibles ($S_{n,m}$) de configurations du robot a lieu de façon à ce que les accélérations axiales ($a_{MAX}$) nécessaires entre les configurations successives du robot soient minimisées.

9. Procédé d'optimisation selon l'une des revendications 5 à 8, **caractérisé en ce que** la valeur de qualité liée à la séquence ($SQ_{n,m}$) indique quelle rotation de l'appareil d'application (7) est nécessaire entre les points de la trajectoire (P1 - P6) dans une séquence ($S_{n,m}$).

10. Procédé d'optimisation selon l'une des revendications précédentes, **caractérisé en ce que**

a) les données des différents points de la trajectoire définissent l'orientation spatiale de l'appareil d'application (7) uniquement en ce qui concerne l'orientation de son axe de pulvérisation, mais pas en ce qui concerne la rotation de l'appareil d'application (7) autour de l'axe de pulvérisation ou

b) les données des différents points de la trajectoire définissent l'orientation spatiale de l'appareil d'application (7) aussi bien en ce qui concerne l'orientation de son axe de pulvérisation qu'en ce qui concerne la rotation de l'appareil d'application (7) autour de l'axe de pulvérisation.

11. Procédé d'optimisation selon l'une des revendications précédentes, **caractérisé en ce que**

a) seules les configurations du robot pour les points suivants sur la trajectoire (B) prédéterminée sont optimisées et

b) les configurations du robot déjà optimisée des points précédents de la trajectoire ne sont plus optimisées mais seulement utilisées pour le calcul de la valeur de qualité liée à la séquence ($SQ_{n,n}$).

12. installation de revêtement pour le revêtement de composants, plus particulièrement installation de peinture pour la peinture de composants de carrosseries de véhicules automobiles, avec

a) un appareil d'application (7) pour l'application d'un produit de revêtement, plus particulièrement un pulvérisateur rotatif pour la pulvérisation d'une peinture,

b) un robot de revêtement multiaxial redondant (1) pour le guidage de l'appareil d'application (7),

c) une commande de robot (10) pour le contrôle du robot de revêtement (1), de façon à ce que l'appareil d'application (7) parcoure la trajectoire (B) prédéterminée,

c1) dans lequel la trajectoire (B) est définie par des données de points de trajectoire pour une pluralité de points de trajectoire successifs (P1 - P6),

c2) dans lequel les données de points de trajectoire définissent, pour le point de trajectoire ($P_n$) correspondant, d'une part l'orientation spatiale de l'appareil d'application (7) au niveau du point de trajectoire ($P_n$) correspondant et d'autre part la position spatiale d'un point de référence (TCP) de l'appareil d'application (7) au niveau du point de trajectoire ($P_n$) correspondant, plus

particulièrement d'un point d'impact de la peinture,

d) une unité de calcul (12) pour le calcul de configurations possibles du robot pour les différents points de la trajectoire (B),

d1) dans lequel chaque configuration du robot comprend respectivement toutes les positions axiales (a1 - a7) de tous les axes du robot (A1 - A7) et

d2) au moins certains des points de la trajectoire (P1 - P6) peuvent être atteints respectivement de manière sélective par plusieurs configurations du robot différentes,

**caractérisée en ce que**

e) l'unité de calcul (12) calcule respectivement une valeur de qualité liée au point de trajectoire ($PQ_{n,m}$) pour les différentes configurations possibles du robot au niveau des différents points de la trajectoire, de façon à ce que, à chaque configuration du robot, corresponde une valeur de qualité ($PQ_{n,m}$),

f) l'unité de calcul (12) sélectionne une des configurations possibles du robot pour les différents points de la trajectoire en fonction de la valeur de qualité liée au point de trajectoire ($PQ_{n,m}$) des différentes configurations possibles du robot.

13. Installation de revêtement selon la revendication 12, **caractérisée en ce que**

a) l'unité de calcul (12) calcule différentes séquences possibles ($S_{n,m}$) de configurations du robot, dans lequel le robot de revêtement (1), lors de l'exécution séquentielle de la séquence ($S_{n,m}$) de configurations du robot, guide l'appareil d'application (7) avec la position spatiale respectivement prédéterminée et l'orientation spatiale respectivement prédéterminée,

b) l'unité de calcul (12) calcule une valeur de qualité liée à la séquence ($SQ_{n,m}$) pour les différentes séquences possibles ($S_{n,m}$) de configurations du robot, de façon à ce que, à chaque séquence ($S_{n,m}$) corresponde respectivement une valeur de qualité liée à la séquence ($SQ_{n,m}$) et

c) l'unité de calcul (12) sélectionne une des différentes séquences possible ($S_{n,m}$) de configurations du robot en fonction de la valeur de qualité liée à la séquence ($SQ_{n,m}$).

9

A4, A5, A6

7

8

TCP

5

6

4

A3

1

3

A2

2

A7

A1

Fig. 1

Stand der Technik

Fig. 3

**Start Optimierung**

Vorgabe einer Bewegungsbahn B, die von dem Farbauftreff-punkt/TCP des Zerstäubers abgefahren werden soll durch eine Abfolge von N Bahnpunkten $P_n$ mit n=1,...,N wobei jeder Bahnpunkt $P_n$ durch Bahnpunktdaten definiert wird, die jeweils einen Vektor bilden:
$P_n=(XP_n, YP_n, ZP_n, XR_n, YR_n, ZR_n)$ — S1

Auswahl des ersten Bahnpunkts für die Optimierung der bevorstehenden Roboterbewegung: n=1 — S2

Optimierung der Roboterstellung auf dem n-ten Bahnpunkt — S3

Auswahl des nächsten Bahnpunkts auf der Bewegungsbahn: n=n+1 — S4

N — n>N? — S5

J

**Ende Optimierung**

Berechnung von M möglichen Roboterkonfigurationen $RK_{n,m}$ für den n-ten Bahnpunkt $P_n$, wobei die Roboterkonfigurationen jeweils die Achsstellungen $a_1,..., a_p$ der P Roboterachsen in dem jeweiligen Bahnpunkt $P_n$ umfassen und einen Vektor bilden:
$RK_{n,m}=(a_1,..., a_p)$   für  n=1,...,N   und   m=1,...,M und p =1,...,P

S3.1

Berechnung eines bahnpunktbezogenen Qualitätswerts $PQ_{n,m}$ für jede der M möglichen Roboterkonfigurationen $RK_{n,m}$ für den n-ten Bahnpunkt

S3.2

Berechnung von M möglichen Sequenzen $S_{n,m}$ für den n-ten Bahnpunkt $P_n$, wobei eine Sequenzen jeweils eine mögliche Roboterkonfiguration $RK_{n,m}$ zu den vorherigen bereits optimierten Roboterkonfigurationen $RK_{n-1,OPT}$, $RK_{n-2,OPT}$ ... oder zu folgenden noch zu optimierenden Roboterkonfigurationen $RK_{n+1,OPT}$, $RK_{n+2,OPT}$ ... in Beziehung setzt, sodass die sich daraus ergebende Dynamik berechnet werden kann.

S3.3

Berechnung eines sequenzbezogenen Qualitätswerts $SQ_{n,m}$ für jede der M möglichen Sequenzen $S_{n,m}$

S3.4

Auswahl einer optimalen Roboterkonfiguration $RK_{n,OPT}$ in Abhängigkeit von:
· den bahnpunktbezogenen Qualitätswerten $PQ_{n,m}$ und
· den sequenzbezogenen Qualitätswerten $SQ_{n,m}$

S3.5

# Fig. 4

Vorgabe einer Störkontur, die Außenkonturen der Umgebung (z.B. Kabinenwand, Kabinenboden, Förderer, etc.) wiedergibt — S3.2.1

Vorgabe einer Roboterkontur, welche die Außenkontur des Lackierroboters wiedergibt — S3.2.2

Berechnung des kleinsten Abstands $d_{n,m}$ zwischen der Roboterkontur des Lackierroboters und der Störkontur für die aktuelle Roboterkonfiguration $RK_{n,m}$ — S3.2.3

Berechnung der Manipulierbarkeit $W_{n,m}$ für die aktuelle Roboterkonfiguration $RK_{n,m}$ — S3.2.4

Berechnung des bahnpunktbezogenen Qualitätswertes $PQ_{n,m}$ in Abhängigkeit von dem minimalen Abstand $d_{n,m}$ und der Manipulierbarkeit $W_{n,m}$:
$$PQ_{n,m}=f(d_{n,m}, W_{n,m})$$
— S3.2.5

Fig. 5

Berechnung der maximalen Achswegstrecke $s_{MAX}$ beim Durchfahren der aktuellen Sequenz $S_{n,m}$ — S3.4.1

Berechnung der maximalen Achsgeschwindigkeit $v_{MAX}$ beim
Durchfahren der aktuellen Sequenz $S_{n,m}$ — S3.4.2

Berechnung der maximalen Achsbeschleunigung $a_{MAX}$ beim
Durchfahren der aktuellen Sequenz $S_{n,m}$ — S3.4.3

Berechnung des sequenzbezogenen Qualitätswerts $SQ_{n,m}$
für die aktuelle Sequenz $S_{n,m}$:
$SQ_{n,m}=f(s_{MAX}, v_{MAX}, a_{MAX})$ — S3.4.5

Fig. 6

Lackierroboter — 1

↑ Steuerung

Robotersteuerung — 100

↑ Optimierte
Robotersequenz $S_{OPT}$

11

Programmiergerät → Berechnungseinheit — 12

Bewegungsbahn B

↑ Vorgabe Störkontur
und Roboterkontur

## Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2072195 A1
- EP 2315093 A1
- EP 1332841 A2

**In der Beschreibung aufgeführte Nicht-Patentliteratur**

- **HYOTYNIEMI H.** *Locally Controlled Optimization of Spray Painting Robot Trajectories,* 20. August 1990, vol. 1, 283-287
- Automated robot trajectory planning for spray painting of free-form surfaces in automotive manufacturing. **HEPING CHEN et al.** PROCEEDINGS, 2002 IEEE INTERNATIONAL CONFERENCE ON ROBOTICS AND AUTOMATION: May 11-15, 2002, Washington, D.C. IEEE SERVICE CENTER, 11. Mai 2002, vol. 1, 450
- ED - Institute of electrical and electronics engineers: "Automated planning of robot workcell layouts. **LUETH T. C.** PROCEEDINGS OF THE INTERNATIONAL CONFERENCE ON ROBOTICS AND AUTOMATION NICE, May 12-14, 19; [PROCEEDINGS OF THE INTERNATIONAL CONFERENCE ON ROBOTICS AND AUTOMATION], Los Alamitos. IEEE COMP. SOC. PRESS, 12. Mai 1992, vol. 8, 1103-1108
- **DENG SIHAO et al.** Kinematic Optimization of Robot Trajectories for Thermal Spray Coating Application. *JOURNAL OF THERMAL SPRAY TECHNOLOGY, ASM INTERNATIONAL, MATERIAL PARK, US,* 12. August 2014, vol. 23 (8), ISSN 1059-9630, 1382-1389